Europäisches Patentamt

European Patent Office

Office européen des brevets

(19)

(11) **EP 0 662 172 B1**

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(21) Anmeldenummer: **93920764.3**

(22) Anmeldetag: **18.09.1993**

(51) Int Cl.$^6$: **D21H 21/12**, D21H 17/14

(86) Internationale Anmeldenummer:
**PCT/EP93/02531**

(87) Internationale Veröffentlichungsnummer:
**WO 94/08091 (14.04.1994 Gazette 1994/09)**

(54) **ENTSCHÄUMER FÜR DIE PAPIERINDUSTRIE AUF DER BASIS VON ÖL-IN-WASSER-EMULSIONEN**

DEFOAMING AGENT FOR THE PAPER INDUSTRY BASED ON OIL IN WATER EMULSIONS

AGENTS ANTIMOUSSE POUR L'INDUSTRIE DU PAPIER, A BASE D'EMULSIONS DU TYPE HUILE DANS L'EAU

(84) Benannte Vertragsstaaten:
**AT BE CH DE ES FR GB IT LI NL PT SE**

(30) Priorität: **28.09.1992 DE 4232415**

(43) Veröffentlichungstag der Anmeldung:
**12.07.1995 Patentblatt 1995/28**

(73) Patentinhaber: **BASF Aktiengesellschaft**
**D-67063 Ludwigshafen (DE)**

(72) Erfinder:
- **SCHUHMACHER, Rudolf**
  **D-6737 Boehl-Iggelheim (DE)**
- **DRALLE-VOSS, Gabriele**
  **D-6100 Darmstadt (DE)**
- **OPPENLAENDER, Knut**
  **D-6700 Ludwigshafen (DE)**
- **WEGNER, Brigitte**
  **D-6725 Roemerberg (DE)**

(56) Entgegenhaltungen:
**EP-A- 0 322 830**

**Beschreibung**

Die Erfindung betrifft Entschäumer für die Papierindustrie auf der Basis von Öl-in-Wasser-Emulsionen, bei denen die Ölphase zu 5 bis 50 Gew.-% am Aufbau der Emulsion beteiligt ist und im wesentlichen aus Mischungen aus Estern langkettiger Carbonsäuren sowie gegebenenfalls üblichen hydrophoben Verbindungen besteht, wie Alkohole mit mindestens 12 C-Atomen, Destillationsruckstanden, die bei der Herstellung von Alkoholen mit einer höheren Kohlenstoffzahl durch Oxosynthese oder nach dem Ziegler-Verfahren erhältlich und die gegebenenfalls alkoxyliert sind, und/oder Kohlenwasserstoffen mit einem Siedepunkt oberhalb von 200°C oder Fettsauren mit 12 bis 22 Kohlenstoffatomen.

Aus der nicht vorveröffentlichten EP-A-0531713 sind Entschäumer für die Papierindustrie auf der Basis von Öl-in-Wasser-Emulsionen bekannt, bei denen die Ölphase zu 5 bis 50 Gew.-% am Aufbau der Emulsion beteiligt ist, und

(a)    einen Alkohol mit mindestens 12 C-Atomen, Fettsäureester aus Alkoholen mit mindestens 22 C-Atomen und $C_1$- bis $C_{36}$-Carbonsauren, Destillationsrückstande, die bei der Herstellung von Alkoholen mit einer höheren Kohlenstoffzahl durch Oxosynthese oder nach dem Ziegler-Verfahren erhältlich und die gegebenenfalls alkoxyliert sind, Mischungen der genannten Verbindungen und/oder

(b)    einen Fettsäureester von $C_{12}$- bis $C_{22}$-Carbonsäuren mit ein- bis dreiwertigen $C_1$- bis $C_{18}$-Alkoholen und gegebenenfalls

(c)    einen Kohlenwasserstoff mit einem Siedepunkt oberhalb von 200°C oder Fett sauren mit 12 bis 22 Kohlenstoffatomen
in Kombination mit

(d)    1 bis 80 Gew.-% Polyglycerinestern enthält, die durch mindestens 20%ige Veresterung von Polyglycerinmischungen aus

     0 bis 10 Gew.-% Monoglycerin,
     15 bis 40 Gew.-% Diglycerin,
     30 bis 55 Gew.-% Triglycerin,
     10 bis 25 Gew.-% Tetraglycerin,
     0 bis 15 Gew.-% Pentaglycerin,
     0 bis 10 Gew.-% Hexaglycerin und
     0 bis 5 Gew.-% höherkondensierten Polyglycerinen

mit mindestens einer Fettsäure mit 12 bis 36 C-Atomen erhältlich sind. Diese Öl-in-Wasser-Emulsionen sind auch bei Temperaturen oberhalb von 35°C, z.B. in den Temperaturbereich von 50 bis 60°C, wirksame Entschäumer bei der Herstellung von Papier. Andere bekannte Entschäumer auf der Basis von Öl-in-Wasser-Emulsionen, die üblicherweise bei der Herstellung von Papier eingesetzt werden, verlieren dagegen an Wirksamkeit, wenn die Temperatur des zu entschäumenden wäßrigen Systems auf Werte über 35°C ansteigt. Bei noch höheren Temperaturen tritt dann bei Einsatz der bekannten Öl-in-Wasser-Emulsionen ein noch schnellerer Abfall der Wirksamkeit der Entschäumer ein. Da die Wasserkreisläufe in den Papierfabriken immer stärker geschlossen werden, resultiert daraus ein Temperaturanstieg des im Kreislauf geführten Wasser bei der Papierherstellung, so daß die Wirksamkeit der bisher verwendeten Entschäumer deutlich absinkt.

Der vorliegenden Erfindung liegt daher die Aufgabe zugrunde, Entschäumer zur Verfügung zu stellen, die auch bei höheren Temperaturen der Wasserkreisläufe in den Papierfabriken noch ausreichend wirksam sind.

Die Aufgabe wird erfindungsgemäß gelöst mit Entschäumern für die Papierindustrie auf der Basis von Öl-in-Wasser-Emulsionen, bei denen die Ölphase zu 5 bis 50 Gew.-% am Aufbau der Emulsion beteiligt ist und im wesentlichen aus Mischungen aus

(a)    Fettsäureestern von $C_{12}$- bis zu $C_{22}$-Carbonsäuren mit ein- bis dreiwertigen $C_1$- bis $C_{22}$-Alkoholen,

(b)    Polyglycerinestern, die durch mindestens 20 %ige Veresterung von Polyglycerinen, die mindestens 2 Glycerineinheiten enthalten, mit mindestens einer $C_{12}$- bis $C_{36}$-Fettsäure erhältlich sind und

(c)    Fettsäureestern aus $C_{12}$- bis $C_{22}$-Carbonsäuren und Polyalkylenglykolen, wobei die Molmasse der Polyalkylenglykole bis zu 5000 g/mol beträgt, sowie gegebenenfalls

(d)    Alkoholen mit mindestens 12 C-Atomen, Fettsäureestern aus Alkohole mit mindestens 22 C-Atomen und $C_1$- bis $C_{36}$-Carbonsäuren, Destillationsrückständen, die bei der Herstellung von Alkohole mit einer höheren Kohlenstoffzahl durch Oxosynthese oder nach dem Ziegler-Verfahren erhältlich und die gegebenenfalls alkoxyliert sind, Mischungen der genannten Verbindungen und/oder

(e)    Kohlenwasserstoffen mit einem Siedepunkt oberhalb von 200°C oder Fettsäuren mit 12 bis 22 Kohlenstoffatomen

besteht.

Als Komponenten (a) der Ölphase der Entschäumer-Emulsion verwendet man Fettsäureester von $C_{12}$- bis $C_{22}$-Carbonsäuren mit einem ein- bis dreiwertigen $C_1$- bis $C_{22}$-Alkohol. Die Fettsäuren, die den Estern zugrundeliegen, sind beispielsweise Laurinsäure, Myristinsäure, Palmitinsäure, Stearinsäure, Arachinsäure und Behensäure. Vorzugsweise verwendet man zur Herstellung der Ester Palmitinsäure oder Stearinsäure. Man kann einwertige $C_1$- bis $C_{18}$-Alkohole zur Veresterung der genannten Carbonsäuren verwenden, z.B. Methanol, Ethanol, n-Propanol, Isopropanol, n-Butanol, Isobutanol, Hexanol, Dekanol, Palmithylalkohol und Stearylalkohol als auch zweiwertige Alkohole wie Ethylenglykol, Propylenglykol, 1,6-Hexandiol, 1,4-Butandiol oder dreiwertige Alkohole wie Glycerin. Die mehrwertigen Alkohole können vollständig oder teilweise verestert sein. Zu dieser Klasse von Verbindungen gehören außerdem die in der Natur vorkommenden pflanzlichen und etherischen Fettsäureester, beispielsweise Kokosöl, Palmöl, Sojaöl, Rüböl und Olivenol oder verschiedene Talgsorten und Fette und Öle tierischer Herkunft, z.B. Rindertalg, Schweineschmalz, Fischöl und Walöl. Die Verbindungen der Gruppe (a) können in Form einzelner definierter Ester oder in Form von Mischungen zur Herstellung der Ölphase der Entschäumeremulsionen verwendet werden. Die Verbindungen der Gruppe (a) sind in einer Menge von 1 bis 90, vorzugsweise 40 bis 80 Gew.-% in der Ölphase enthalten.

Als Verbindungen der Gruppe (b) verwendet man Polyglycerinester, die durch mindestens 20 %ige Veresterung von Polyglycerinen, die mindestens 2 Glycerineinheiten enthalten, mit mindestens einer $C_{12}$- bis $C_{36}$-Fettsäure erhältlich sind. Die den Estern zugrundeliegenden Polyglycerine werden mindestens soweit verestert, daß Verbindungen entstehen, die in Wasser praktisch nicht mehr loslich sind. Die Polyglycerine werden üblicher Weise durch alkalisch katalysiertes Kondensieren von Glycerin bei höheren Temperaturen oder durch Umsetzung von Epichlorhydrin mit Glycerin in Gegenwart von sauren Katalysatoren erhalten, vgl. z.B. Fette, Seifen, Anstrichmittel, 88 Jahrgang, Nr. 3, Seiten 101 bis 106 (1986). Bei beiden genannten Verfahren entstehen in aller Regel Produktgemische, die Polyglycerine mit mindestens 2 Glycerin-Einheiten enthalten. Die Verteilung der einzelnen Polymeren kann herstellungsbedingt variieren. Die Polyglycerine enthalten üblicherweise mindestens 2 bis etwa 30, vorzugsweise 2 bis 12 Glycerin-Einheiten einpolymerisiert. Im Handel sind beispielsweise Polyglycerine erhältlich, die die polymeren Glycerine in folgenden Mengen enthalten:

15 bis 40 Gew.-% Diglycerin,
30 bis 55 Gew.-% Triglycerin,
10 bis 25 Gew.-% Tetraglycerin,
0 bis 15 Gew.-% Pentaglycerin,
0 bis 10 Gew.-% Hexaglycerin und
0 bis 5 Gew.-% höher kondensierte Polyglycerine.

Polyglycerine mit mindestens 2 Glycerineinheiten werden mit mindestens einer Fettsäure mit 12 bis 36, vorzugsweise 16 bis 30 C-5 Atomen im Molekül verestert. Der Veresterungsgrad der OH-Gruppen der Polyglycerine beträgt mindestens 20 bis 100, vorzugsweise 60 bis 100 %. Die zur Veresterung verwendeten langkettigen Fettsäuren können gesättigt oder auch ethylenisch ungesättigt sein. Geeignete Fettsäuren sind beispielsweise Laurinsäure, Myristinsäure, Palmitinsäure, Stearinsäure, Arachinsäure, Behensäure, Ölsäure, Hexadecensäuren, Elaidinsäure, Eicosensäuren, Docosensäuren wie Erucasäure oder Prasidinsäure sowie mehrfach ethylenisch ungesättigte Säuren, wie Octadecadiensäuren und Octadecatriensäuren, z.B. Linolsäure und Linolensäure, Mischungen der genannten gesättigten Carbonsäuren, Mischungen der genannten ungesättigten Carbonsäuren sowie Mischungen der gesättigten und ethylenisch ungesattigten Carbonsäuren sowie Montanwachssäure. Außer Mischungen der Polyglycerine kann man auch als Verbindungen der Komponente (b), die zumindest 20 % veresterten reinen Polymeren verwenden, z.B. Ester von Diglycerin, Triglycerin, Tetraglycerin, Pentaglycerin oder Hexaglycerin oder Ester höher kondensierter Polyglycerine. Die Polyglycerinester werden üblicherweise in Gegenwart eines sauren Veresterungskatalysators hergestellt, wie Schwefelsäure, p-Toluolsulfonsäure, Zitronensäure, phosphorige Saure, Phosphorsaure, hypophosphorige Säure oder basische Katalysatoren wie Natriummethylat oder Kalium-tert.-butylat.

Die Verbindungen der Komponente (b) sind zu 1 bis 80, vorzugsweise 5 bis 20 Gew.-% in der Ölphase enthalten.

Als Komponente (c) der Ölphase kommen Fettsäureester aus $C_{12}$- bis $C_{22}$-Carbonsauren und Polyalkylenglykolen in Betracht, die eine Molmasse bis zu 5000 g/mol haben. Die den Estern zugrundeliegenden Carbonsauren sind bereits oben bei der Schilderung der Zusammensetzung der Komponente (a) genannt. Geeignete Polyalkylenglykole sind beispielsweise Polyethylenglykol, Polypropylenglykol und Polybutylenglykol sowie Blockcopolymerisate aus Ethylenoxid und Propylenoxid, aus Ethylenoxid und Butylenoxid oder aus Ethylenoxid, Propylenoxid und Butylenoxid. Die Copolymerisate können die Alkylenoxide auch in statistischer Verteilung einpolymerisiert enthalten. Die Molmasse der Polyalkylenglykole betragt bis zu 5000 g/mol. Die Polyalkylenglykole enthalten mindestens 2 Alkyienoxid-Einheiten wie Ethylenoxideinheiten einpolymerisiert. Vorzugsweise verwendet man als Veresterungskomponente für die Fettsauren Polyethylenglykole mit Molmassen von 200 bis 1000 sowie Blockcopolymerisate aus Ethylenoxid und Propylenoxid mit einer Molmasse von 500 bis 2000 g/mol. Ethylenoxid und Propylenoxid konnen in jedem beliebigen Verhältnis zur Herstellung von Blockcopolymerisaten umgesetzt werden.

Die Blockcopolymerisate und die statistischen Copolymerisate enthalten üblicherweise 5 bis 50, vorzugsweise 20 bis 40 Gew.-% Ethylenoxid und 50 bis 95, vorzugsweise 60 bis 80 Gew.-% Propylenoxid einpolymerisiert. Die Herstellung der Verbindungen der Gruppe (c) kann durch Veresterung der obengenannten Polyalkylenglykole mit $C_{16}$- bis $C_{20}$-Carbonsäuren wie Palmitinsäure oder Stearinsäure erfolgen oder man lagert an eine $C_{12}$- bis $C_{22}$-Carbonsäure Alkylenoxide an, z.B. Ethylenoxid oder Mischungen aus Ethylenoxid und Propylenoxid (statistisch oder blockweise), und verestert anschließend die freibleibende OH-Gruppe der Polyetherester mit einer $C_{12}$- bis $C_{22}$-Carbonsäure. Für die Veresterung kann die gleiche oder auch eine andere langkettige Carbonsäure eingesetzt werden als die, die der Alkoxylierungsreaktion unterworfen wurde. Die Fettsäureester der Komponente (c) sind zu 1 bis 80, vorzugsweise 5 bis 20 Gew.-% in der Ölphase enthalten.

Die Ölphase der Entschäumeremulsionen kann außer den Komponenten (a), (b) und (c) gegebenenfalls noch zusätzlich üblicherweise in Entschäumermischungen verwendete Bestandteile enthalten. Beispiele hierfür sind die Verbindungen der Gruppe (d). Hierzu gehören Alkohole mit mindestens 12 C-Atomen, Fettsäureester aus Alkoholen mit mindestens 22 C-Atomen und $C_1$- bis $C_{36}$-Carbonsäuren, Destillationsrückstande, die bei der Herstellung von Alkoholen mit einer höheren Kohlenstoffzahl durch Oxosynthese oder nach dem Ziegler-Verfahren erhältlich und die gegebenenfalls alkoxyliert sind sowie Mischungen der genannten Verbindungen.

Als Komponente (d) der Ölphase der Öl-in-Wasser-Emulsionen setzt man vor allem Alkohole mit mindestens 12 C-Atomen oder Mischungen von Alkoholen ein. Es handelt sich hierbei in aller Regel um einwertige Alkohole, die bis zu 48 C-Atome im Molekül enthalten. Solche Produkte sind im Handel erhältlich. Es können jedoch auch solche Fettalkohole als Komponente (d) eingesetzt werden, die eine wesentliche höhere Anzahl von Kohlenstoffatomen im Molekül enthalten. Bei den Alkoholen der Komponente (d) handelt es sich entweder um natürliche oder um synthetische Alkohole. Beispielsweise eignen sich Laurylalkohol, Myristylalkohol, Cetylalkohol, Palmitylalkohol, Stearylalkohol, Behenylalkohol, Oleylalkohol, Ricinolalkohol, Linoleylalkohol und Erucaalkohol.

Als Komponente (d) kann man auch Mischungen von Alkoholen einsetzen, z.B. Mischungen aus (1) Alkoholen mit 12 bis 26 C-Atomen und (2) Alkoholen mit 28 bis 48 C-Atomen.

Die synthetischen Alkohole, die beispielsweise nach dem Ziegler-Verfahren durch Oxidation von Aluminiumalkylen erhältlich sind, sind gesättigte, geradkettige unverzweigte Alkohole. Synthetische Alkohole werden auch durch Oxosynthese erhalten. Hierbei fallen in aller Regel Alkoholgemische an. Als Komponente (d) der Ölphase der Entschäumeremulsionen können außerdem Destillationsrückstände verwendet werden, die bei der Herstellung der vorstehend genannten Alkohole durch Oxosynthese oder nach dem Ziegler-Verfahren erhalten werden. Als Bestandteil (d) der Ölphase der Entschäumer) emulsionen eignen sich auch alkoxylierte Destillationsrückstände, die bei den obengenannten Verfahren zur Herstellung von höheren Alkoholen durch Oxosynthese oder nach dem Ziegler-Verfahren anfallen. Man erhält die oxalkylierten Destillationsrückstände dadurch, daß man die Destillationsrückstände mit Ethylenoxid oder mit Propylenoxid oder auch mit einer Mischung aus Ethylenoxid und Propylenoxid nach bekannten Verfahren der Alkoxylierung unterwirft. Pro OH-Gruppe des Alkohols im Destillationsrückstand werden bis zu 5 Ethylenoxid- bzw. Propylenoxidgruppen angelagert. Vorzugsweise addiert man pro OH-Gruppe des Alkohols im Destillationsrückstand 1 bis 2 Ethylenoxidgruppen.

Als Komponente (d) eignen sich auch Fettsäureester aus Alkoholen mit mindestens 22 C-Atomen und $C_1$- bis $C_{36}$-Carbonsäuren, z.B. Montanwachse oder Carnaubawachse. Die Verbindungen der Komponente (d) werden gegebenenfalls bis zu 80, vorzugsweise bis zu 10 Gew.-%, bezogen auf die Komponenten (a), (b) und (c) in der Ölphase der Entschäumeremulsionen eingesetzt.

Die erfindungsgemäßen Öl-in-Wasser-Emulsionen können gegebenenfalls eine weitere Gruppe üblicher Bestandteile von Ölentschäumern enthalten, nämlich (e) Kohlenwasserstoffe mit einem Siedepunkt oberhalb von 200°C oder Fettsäuren mit 12 bis 22 Kohlenstoffatomen. Die Verbindungen der Gruppe (e) sind, bezogen auf die Komponenten (a), (b) und (c) bis zu 50, vorzugsweise bis zu 20 Gew.-% in der Ölphase enthalten.

Die erfindungsgemäßen Entschäumeremulsionen werden durch emulgieren der Ölphase in die wäßrige Phase hergestellt. Hierbei kann man so vorgehen, daß man entweder die Komponenten (a), (b) und (c) sowie gegebenenfalls (d) und/oder (e) einzeln in die wäßrige Phase einemulgiert oder, daß man zunächst eine Mischung aus den Komponenten (a) und (b) und (c) sowie gegebenenfalls (d) und/oder (e) herstellt und diese Mischung dann in die wäßrige Phase einemulgiert. Die Ölphase ist zu 5 bis 50 Gew.% am Aufbau der Öl-in-Wasser-Emulsionen beteiligt, während der Anteil der wäßrigen Phase am Aufbau der Emulsionen 95 bis 50 Gew.-% beträgt, wobei sich die Angaben in Gew.-% jeweils zu 100 addieren. Die Ölphase besteht im wesentlichen aus den Mischungen der Komponenten (a) bis (c) und gegebenenfalls (d) und/oder (e). Aufgrund von Gleichgewichten kann jedoch nicht ausgeschlossen werden, daß bestimmte Bestandteile der wäßrigen Phase auch in die Ölphase übergehen. Die Ölphase der erfindungsgemäßen Entschäumeremulsionen besteht jedoch zu mindestens 99 Gew.-% aus den Komponenten (a) bis (c) und gegebenenfalls (d) und/oder (e).

Um die Ölphase in die wäßrige Phase einzuemulgieren, benötigt man Vorrichtungen, in denen die Komponenten der Emulsion einem starken Schergefälle unterworfen werden, z.B. Dispergatoren. Um besonders stabile Öl-in-Wasser-Emulsionen zu erhalten, führt man die Emulgierung der Ölphase in der wäßrigen Phase vorzugsweise in Gegenwart von grenzflächenaktiven Stoffen durch, die einen HLB-Wert von mehr als 6 haben (zur Definition des HLB-Werts vgl. W.C. Griffin, Journal of the Society of Cosmetic Chemists, Band 5, Seiten 249 bis 256 (1954)). Bei den grenzflächenaktiven Stoffen handelt es sich um Öl-in-Wasser-Emulgatoren bzw. um typische Netzmittel. Von den grenzflächenaktiven Stoffen kann man anionische, kationische oder nichtionische Verbindungen verwenden, bzw. Mischungen dieser Verbindungen, die miteinander verträglich sind z.B. Mischungen aus anionischen und nichtionischen oder kationischen und nichtionischen Netzmitteln. Stoffe der genannten Art sind beispielsweise Natrium- oder Ammoniumsalze höherer Fettsauren, wie Ammoniumoleat oder Ammoniumstearat, oxalkylierte Alkylphenole, wie Nonylphenol oder Isooctylphenol, die im Molverhältnis 1 zu 2 bis 1 zu 50 mit Ethylenoxid umgesetzt sind, oxethylierte ungesättigte Öle, z.B. die Reaktionsprodukte aus einem Mol Rizinusöl und 30 bis 40 Mol Ethylenoxid oder die Umsetzungsprodukte aus einem Mol Spermalkohol mit 60 bis 80 Mol Ethylenoxid. Als Emulgatoren werden auch vorzugsweise sulfierte Oxethylierungsprodukte von Nonylphenol oder Octylphenol eingesetzt, die als Natrium- oder Ammoniumsalz der entsprechenden Schwefelsäurehalbester vorliegen oder Benzol- bzw. Alkylbenzolsulfonsäuren und deren Salze. 100 Gew.-Teile der Öl-in-Wasser-Emulsionen enthalten üblicherweise 0,1 bis 5 Gew.-Teile eines Emulgators oder eines Emulgatorgemisches. Außer den bereits genannten Emulgatoren kann man noch Schutzkolloide, wie hochmolekulare Polysaccharide und Seifen oder andere übliche Zusatzstoffe wie Stabilisatoren bei der Herstellung der Öl-in-Wasser-Emulsionen einsetzen. So hat sich beispielsweise ein Zusatz von 0,05 bis 0,5 Gew.-%, bezogen auf die gesamte Emulsion an hochmolekularen, wasserlöslichen Homo- und Copolymerisaten von Acrylsäure, Methacrylsäure, Acrylamid oder Methacrylamid als Stabilisator bewährt. Die Verwendung solcher Stabilisatoren ist beispielsweise Gegenstand der EP-A-0 149 812.

Durch das Einemulgieren der Ölphase in die wäßrige Phase erhält man Öl-in-Wasser-Emulsionen, die unmittelbar nach der Herstellung eine Viskosität in dem Bereich von 300 bis 3000 mPas aufweisen und die eine mittlere Teilchengröße der Ölphase von unterhalb 25 µm, vorzugsweise in dem Bereich von 0,5 bis 15 µm haben.

Obwohl die Mischungen der Komponenten (a) und (b) bzw. (a) und (c) allein eine geringe Wirksamkeit als Öl-in-Wasser-Emulsionsentschäumer aufweisen, tritt überraschenderweise bei Kombination einer Verbindung der Komponente (b) mit Verbindungen (a) und (c) ein synergistischer Effekt auf. Die erfindungsgemäßen Öl-in-Wasser-Emulsionen werden in der Papierindustrie in wäßrigen Systemen eingesetzt, bei denen die Entstehung von Schaum, insbesondere bei höheren Temperaturen bekämpft werden muß, z.B. bei der Zellstoffkochung, der Mahlung von Papierstoff, der Papierherstellung bei geschlossenen Wasserkreisläufen von Papiermaschinen und der Dispergierung von Pigmenten für die Papierherstellung. Bezogen auf 100 Gew.-Teile Papierstoff in einem schaumbildenden Medium verwendet man 0,02 bis 0,5, vorzugsweise 0,05 bis 0,3 Gew.-Teile der Öl-in-Wasser-Entschäumer-Emulsion.

Die erfindungsgemäßen Entschäumer bewirken außerdem beim Zusatz zu einer Papierstoffsuspension eine Entlüftung und werden daher auch als Entlüfter bei der Papierherstellung (Zusatz zum Papierstoff) verwendet. Sie eignen sich außerdem als Entschäumer bei der Papierbeschichtung, wo sie Papierstreichfarben zugesetzt werden. Die Entschäumer können auch in der Nahrungsmittelindustrie, der Stärkeindustrie sowie in Kläranlagen bei der Schaumbekämpfung verwendet werden. Sofern sie dem Papierstoff als Entlüfter zugesetzt werden, betragen die dafür angewendeten Mengen 0,02 bis 0,5 Gew.-Teile pro 100 Gew.-Teile Papierstoff.

Die in den Beispielen angegebenen Teile sind Gew.-Teile. Die Prozentangaben beziehen sich auf das Gewicht der Stoffe. Die mittlere Teilchengröße der in Wasser emulgierten Teilchen der Ölphase wurde mit Hilfe eines Coulter-Counters bestimmt. Der K-Wert von Polymerisaten wurde nach H. Fikentscher, Cellulose-Chemie, Band 13, 58 bis 64 und 71 bis 74 (1932) in wäßriger Lösung bei einer Temperatur von 25°C und einer Konzentration von 0,5 Gew.-% bei pH 7 bestimmt.

Beispiel 1

Mit Hilfe eines Dispergates wird eine Öl-Wasser-Emulsion hergestellt, bei der die Ölphase zu 29 Gew.-% am Aufbau der Emulsion beteiligt ist und eine mittlere Teilchengröße von 2 bis 10 µm hat.

Die Ölphase besteht aus folgenden Komponenten:

(a)      18 Teilen eines Glycerintriesters von $C_{16}$- bis $C_{18}$-Fettsäuren,

(b)      5 Teilen eines Polyglycerinesters, der erhältlich ist durch Verestern eines Polyglyceringemisches aus

27 % Diglycerin,
44 % Triglycerin,
19 % Tetraglycerin und
10 % höher kondensierten Polyglycerine

mit einem $C_{12}$- bis $C_{26}$-Fettsäuregemisch. Der Veresterungsgrad beträgt 60 % und

(c)      2 Teilen eines Fettsäureesters, der durch Verestern eines $C_{16}$- bis $C_{18}$-Fettsäuregemisches. mit einem Blockcopolymerisat aus Ethylenoxid und Propylenoxid im Molverhältnis 3:7 vom Molekulargewicht 1200 g/mol erhältlich ist.

Die Wasserphase besteht aus 3 Teilen eines Emulgators, der erhältlich ist durch Anlagerung von 25 Mol Ethylenoxid an 1 Mol Isooctylphenol und Verestern des Anlagerungsproduktes mit Schwefelsäure zum Halbester,
ein Teil eines Copolymerisats aus 70 % Acrylamid und 30 % Acrylsaure vom K-Wert 270, 0,2 Teile Natronlauge und 70 Teilen Wasser.

Die Komponenten (a), (b) und (c) werden zunächst bis auf eine Temperatur von 110°C erhitzt und dann in die auf 80°C erwärmte wäßrige Phase unter Dispergieren zugefügt. Die so erhältliche Öl-in-Wasser-Emulsion hat bei einer Temperatur von 20°C unmittelbar nach der Herstellung eine Viskosität von 540 mPas.

Vergleichsbeispiel 1

Gemäß der Lehre der EP-A-0 149 812 wird zunächst eine Ölphase aus folgenden Komponenten durch Mischen hergestellt:

- 23 Teile eines Fettalkoholgemisches von $C_{12}$- bis $C_{26}$-Alkoholen
- 5 Teile eines Glycerintriesters von $C_{16}$- bis $C_{18}$-Fettsäuren und
- 1 Teil eines Mineralöls (handelsübliches Weißöl).

Die Wasserphase besteht aus:

3 Teilen eines Emulgators, der erhältlich ist durch Anlagerung von 25 Mol Ethylenoxid an 1 Mol Isooctylphenol und Verestern des Anlagerungsprodukts mit Schwefelsäure zum Halbester,

1 Teil eines Copolymerisats aus 70 % Acrylamid und 30 % Acrylsäure von K-Wert 270,

0,2 Teilen Natronlauge und

65 Teilen Wasser.

Die oben beschriebene Ölphase wird zunächst bis auf eine Temperatur von 110°C erhitzt und dann in die auf 80°C erwärmte wäßrige Phase unter Dispergieren zugefügt. Die so erhältliche Öl-in-Wasser-Emulsion hat bei einer Temperatur von 20°C unmittelbar nach der Herstellung eine Viskosität von 1830 mPas und eine Teilchengröße von 2-10 µm.

Vergleichsbeispiel 2

Nach der in Beispiel 1 angegebenen Vorschrift wird eine Ölphase aus 18 Teilen des Glycerinesters von $C_{16}$- bis $C_{18}$-Fettsäuren (= Komponenten (a) gemäß Beispiel) und 7 Teilen des Polyglycerinesters der Komponente (b) des Beispiels nach der ebenfalls im Beispiel beschriebenen Methode in der dort angegebenen Wasserphase emulgiert. Man erhält eine Öl-in-Wasser-Emulsion, die bei einer Temperatur von 20°C unmittelbar nach der Herstellung einer Viskositat von 760 mPas und eine mittlere Teilchengröße von 2 bis 10 µm hat.

Vergleichsbeispiel 3

Man verfährt nach der im Beispiel 1 angegebenen Arbeitsweise, wobei man jedoch als Ölphase 18 Teile der dort beschriebenen Komponente (a) und 7 Teile der im Beispiel beschriebenen Komponente (c) einsetzt. Man erhält eine Entschäumeremulsion, die unmittelbar nach der Herstellung einer Viskosität von 920 mPas bei 20°C und eine mittlere Teilchengröße von 2 bis 10 µm hat.

Die gemäß Beispiel erhaltene Öl-in-Wasser-Emulsion und die Emulsionen gemäß den Vergleichsbeispielen 1 bis 3 werden bezüglich ihrer Wirksamkeit an einer Papierstoffsuspension getestet. Die Wirksamkeit der Entschäumeremulsionen wird durch die Bestimmung des Schaumwertes ermittelt. Hierzu verfährt man folgendermaßen:

In einer Rinne aus einem durchsichtigen Kunststoff werden jeweils 5 l einer schaumentwickelnden Papierstoffsuspension 0,1 % (Holzschliff) 5 Minuten umgepumpt. Die an der Oberfläche der Stoffsuspension gebildete Schaummenge wird dann mit Hilfe eines Rasters an der Wand der Rinne in Flächeneinheiten ($cm^2$) gemessen und als sogenannter Schaumwert zur Beurteilung der Wirksamkeit eines Entschäumers angegeben.

Pumpt man die Papierstoffsuspension in Abwesenheit eines Entschäumers 5 Minuten um, so erhält man einen Schaumwert von 1200 bis 1250 $cm^2$. Durch die Zugabe von jeweils 2 mg/l eines wirksamen Entschäumers (insgesamt 10 mg fest) zu der Papierstoffsuspension wird dieser Wert deutlich reduziert, so daß er ein Maß für die Wirksamkeit eines Entschäumers darstellt.

Prüfung der Entschäumer:

Die Temperatur der oben beschriebenen Papierstoffsuspension beträgt 50, wobei die Temperatur während der 5-minütigen Prüfung auf ± 1°C konstant gehalten wird.

Die Wirksamkeit der Entschäumer wird als Prozent Restschaum R dargestellt:

$$R = \frac{S_e \cdot 100}{S_o},$$

wobei $S_e$ der Schaumwert bedeutet, der nach Zugabe eines Entschäumers und $S_o$ der Schaumnullwert ist, d.h. der Wert, der in Abwesenheit eines Entschaumers gemessen wird. In dieser Terminologie ist der Entschäumer um so besser je kleiner R ist.

Folgende Ergebnisse werden erhalten:

|  | % Restschaum |
|---|---|
| Beispiel | 23 |
| Vergleichsbeispiel | |
| 1 | 34 |
| 2 | 40 |
| 3 | 63 |

## Patentansprüche

**Patentansprüche für folgende Vertragsstaaten : AT, BE, CH, LI, DE, FR, GB, IT, NL, PT, SE,**

1. Entschäumer für die Papierindustrie auf der Basis von Öl-in-Wasser-Emulsionen, bei denen die Ölphase zu 5 bis 50 Gew.-% am Aufbau der Emulsionen beteiligt ist, und im wesentlichen aus Mischungen aus

   (a) Fettsäureestern von $C_{12}$- bis $C_{22}$-Carbonsäuren mit ein- bis dreiwertigen $C_1$- bis $C_{22}$-Alkoholen,

   (b) Polyglycerinestern, die durch mindestens 20 %ige Veresterung von Polyglycerinen, die mindestens 2 Glycerineinheiten enthalten, mit mindestens einer $C_{12}$- bis $C_{36}$-Fettsäure erhältlich sind und

   (c) Fettsäureestern aus $C_{12}$- bis $C_{22}$-Carbonsäuren und Polyalkylenglykolen, wobei die Molmasse der Polyalkylenglykole bis zu 5000 g/mol beträgt, sowie gegebenenfalls

   (d) Alkoholen mit mindestens 12 C-Atomen, Fettsäureestern aus Alkoholen mit mindestens 22 C-Atomen und $C_1$- bis $C_{36}$-Carbonsäuren, Destillationsrückständen, die bei der Herstellung von Alkoholen mit einer höheren Kohlenstoffzahl durch Oxosynthese oder nach dem Ziegler-Verfahren erhältlich und die gegebenenfalls alkoxyliert sind, Mischungen der genannten Verbindungen und/oder

   (e) Kohlenwasserstoffen mit einem Siedepunkt oberhalb von 200°C oder Fettsäuren mit 12 bis 22 Kohlenstoffatomen

   besteht.

2. Verwendung der Entschäumer nach Anspruch 1 zur Schaumbekämpfung bei der Zellstoffkochung, der Mahlung von Papierstoff, der Papierherstellung und der Dispergierung von Pigmenten für die Papierherstellung in Mengen von 0,02 bis 0,5 Gew.-Teilen pro 100 Gew.-Teile des schaumbildenden Mediums.

3. Verwendung der Entschäumer nach Anspruch 1 als Entlüfter in Papierstoffen in Mengen von 0,02 bis 0,5 Gew.-Teilen pro 100 Gew.-Teile der Papierstoffe.

**Patentansprüche für folgenden Vertragsstaat : ES**

1. Verwendung von Öl-in-Wasser-Emulsionen, bei denen die Ölphase zu 5 bis 50 Gew.-% am Aufbau der Emulsionen beteiligt ist, und im wesentlichen aus Mischungen aus

   (a) Fettsäureestern von $C_{12}$- bis $C_{22}$-Carbonsäuren mit ein- bis dreiwertigen $C_1$- bis $C_{22}$-Alkoholen,

   (b) Polyglycerinestern, die durch mindestens 20 %ige Veresterung von Polyglycerinen, die mindestens 2 Glycerineinheiten enthalten, mit mindestens einer $C_{12}$- bis $C_{36}$-Fettsäure erhältlich sind und

   (c) Fettsäureestern aus $C_{12}$- bis $C_{22}$-Carbonsäuren und Polyalkylenglykolen, wobei die Molmasse der Polyalkylenglykole bis zu 5000 g/mol beträgt, sowie gegebenenfalls

   (d) Alkoholen mit mindestens 12 C-Atomen, Fettsäureestern aus Alkoholen mit mindestens 22 C-Atomen und $C_1$- bis $C_{36}$-Carbonsäuren, Destillationsrückständen, die bei der Herstellung von Alkoholen mit einer höheren Kohlenstoffzahl durch Oxosynthese oder nach dem Ziegler-Verfahren erhältlich und die gegebenenfalls alkoxyliert sind, Mischungen der genannten Verbindungen und/oder

   (e) Kohlenwasserstoffen mit einem Siedepunkt oberhalb von 200°C oder Fettsäuren mit 12 bis 22 Kohlenstoffatomen

   besteht, als Entschäumer für die Papierindustrie.

2. Verwendung der Entschäumer nach Anspruch 1 zur Schaumbekämpfung bei der Zellstoffkochung, der Mahlung von Papierstoff, der Papierherstellung und der Dispergierung von Pigmenten für die Papierherstellung in Mengen von 0,02 bis 0,5 Gew.-Teilen pro 100 Gew.-Teile des schaumbildenden Mediums.

3. Verwendung der Entschäumer nach Anspruch 1 als Entlüfter in Papierstoffen in Mengen von 0,02 bis 0,5 Gew.-Teilen pro 100 Gew.-Teile der Papierstoffe.

## Claims

**Claims for the following Contracting States : AT, BE, CH, DE, FR, GB, IT, LI, NL, PT, SE**

1. An antifoam for the paper industry based on an oil-in-water emulsion in which the oil phase accounts for from 5 to 50% by weight of the emulsion and consists essentially of a mixture of

(a) fatty esters of $C_{12}$-$C_{22}$-carboxylic acids with monohydric to trihydric $C_1$-$C_{22}$-alcohols,

(b) polyglyceryl esters which are obtainable by at least 20% esterification of polyglycerols which contain at least 2 glyceryl units with at least one $C_{12}$-$C_{36}$-fatty acid and

(c) fatty esters of $C_{12}$-$C_{22}$-carboxylic acids and polyalkylene glycols, the molecular weight of the polyalkylene glycols being up to 5,000 g/mol, and, if required,

(d) alcohols of at least 12 carbon atoms, fatty esters of alcohols of at least 22 carbon atoms and $C_1$-$C_{36}$-carboxylic acids, distillation residues which are obtainable in the preparation of alcohols having a relatively large number of carbon atoms by oxo synthesis or by the Ziegler process and which may be alkoxylated, or a mixture of the stated compounds or

(e) hydrocarbons having a boiling point above 200°C or fatty acids of 12 to 22 carbon atoms.

2. Use of an antifoam as claimed in claim 1 for foam control in pulp digestion, in the beating of paper stock, in papermaking and in dispersing pigments for papermaking, in an amount of from 0.02 to 0.5 part by weight per 100 parts by weight of the foam-forming medium.

3. Use of an antifoam as claimed in claim 1 as a deaerator in paper stocks, in an amount of from 0.02 to 0.5 part by weight per 100 parts by weight of the paper stocks.

**Claims for the following Contracting State : ES**

1. Use of an oil-in-water emulsion in which the oil phase accounts for from 5 to 50% by weight of the emulsion and consists essentially of a mixture of

(a) fatty esters of $C_{12}$-$C_{22}$-carboxylic acids with monohydric to trihydric $C_1$-$C_{22}$-alcohols,

(b) polyglyceryl esters which are obtainable by at least 20% esterification of polyglycerols which contain at least 2 glyceryl units with at least one $C_{12}$-$C_{36}$-fatty acid and

(c) fatty esters of $C_{12}$-$C_{22}$-carboxylic acids and polyalkylene glycols, the molecular weight of the polyalkylene glycols being up to 5,000 g/mol, and, if required,

(d) alcohols of at least 12 carbon atoms, fatty esters of alcohols of at least 22 carbon atoms and $C_1$-$C_{36}$-carboxylic acids, distillation residues which are obtainable in the preparation of alcohols having a relatively large number of carbon atoms by oxo synthesis or by the Ziegler process and which may be alkoxylated, or a mixture of the stated compounds or

(e) hydrocarbons having a boiling point above 200°C or fatty acids of 12 to 22 carbon atoms,

as an antifoam for the paper industry.

2. Use of an antifoam as claimed in claim 1 for foam control in pulp digestion, in the beating of paper stock, in papermaking and in dispersing pigments for papermaking, in an amount of from 0.02 to 0.5 part by weight per 100 parts by weight of the foam-forming medium.

3. Use of an antifoam as claimed in claim 1 as a deaerator in paper stocks, in an amount of from 0.02 to 0.5 part by weight per 100 parts by weight of the paper stocks.

**Revendications**

**Revendications pour les Etats contractants suivants : AT, BE, CH, DE, FR, GB, IT, LI, NL, PT, SE**

1. Agents antimousse pour l'industrie du papier, à base d'émulsions huile-dans-eau, dont l'oléophase participe pour jusqu'à 5 à 50% en poids à la constitution des émulsions et se compose, en essence, de mélanges constitués

(a) d'esters d'acides gras d'acides carboxyliques en $C_{12}$ à $C_{22}$ d'alcools en $C_1$ à $C_{22}$ mono- à trihydroxylés,

(b) d'esters de polyglycérines, que l'on peut obtenir par l'estérification à au moins 20% de polyglycérines, qui contiennent au moins deux unités glycérine, avec au moins un acide gras en $C_{12}$ à $C_{36}$ et

(c) d'esters d'acides gras d'acides carboxyliques en $C_{12}$ à $C_{22}$ et de polyalkylèneglycols, où la masse moléculaire des polyalkylèneglycols atteint jusqu'à 5000 g/mole, comme éventuellement aussi

(d) d'alcools comportant au moins 12 atomes de carbone, d'esters d'acides gras d'alcools comportant au moins 22 atomes de carbone et d'acides carboxyliques en $C_1$ à $C_{36}$, de résidus de distillation que l'on peut obtenir au cours de la fabrication d'alcools avec un nombre supérieur d'atomes de carbone par oxosynthèse ou par le procédé de Ziegler et qui sont éventuellement alcoxylés, de mélanges des composés susmentionnés et/ou

(e) d'hydrocarbures possédant un point d'ébullition supérieur à 200°C ou d'acides gras comportant 12 à 22 atomes de carbone.

2. Utilisation des agents antimousse suivant la revendication 1 pour combattre la formation de mousse au cours de la cuisson de la pâte, du raffinage de la pâte, de la fabrication du papier et de la dispersion des pigments pour la fabrication du papier, en proportions de 0,02 à 0,5 partie en poids par 100 parties en poids du milieu formateur de mousse.

3. Utilisation des agents antimousse suivant la revendication 1, à titre d'agents de désaération de pâtes à papier, en proportions de 0,02 à 0,5 partie en poids par 100 parties en poids de la pâte à papier.

3. Utilisation des agents antimousse suivant la revendication 1, à titre d'agents de désaération de pâtes à papier, en proportions de 0,02 à 0,5 partie en poids par 100 parties en poids de la pâte à papier.

**Revendications pour l'Etat contractant suivant : ES**

1. Utilisation d'émulsions huile-dans-eau, dont l'oléophase participe pour jusqu'à 5 à 50% en poids à la constitution des émulsions et se compose, en essence, de mélanges constitués

   (a)  d'esters d'acides gras d'acides carboxyliques en $C_{12}$ à $C_{22}$ d'alcools en $C_1$ à $C_{22}$ mono- à trihydroxylés,

   (b)  d'esters de polyglycérines, que l'on peut obtenir par l'estérification à au moins 20% de polyglycérines, qui contiennent au moins deux unités glycérine, avec au moins un acide gras en $C_{12}$ à $C_{36}$ et

   (c)  d'esters d'acides gras d'acides carboxyliques en $C_{12}$ à $C_{22}$ et de polyalkylèneglycols, où la masse moléculaire des polyalkylèneglycols atteint jusqu'à 5000 g/mole, comme éventuellement aussi

   (d)  d'alcools comportant au moins 12 atomes de carbone, d'esters d'acides gras d'alcools comportant au moins 22 atomes de carbone et d'acides carboxyliques en $C_1$ à $C_{36}$, de résidus de distillation que l'on peut obtenir au cours de la fabrication d'alcools avec un nombre supérieur d'atomes de carbone par oxosynthèse ou par le procédé de Ziegler et qui sont éventuellement alcoxylés, de mélanges des composés susmentionnés et/ou

   (e)  d'hydrocarbures possédant un point d'ébullition supérieur à 200°C ou d'acides gras comportant 12 à 22 atomes de carbone,

   à titre d'agents antimousse pour l'industrie du papier.

2. Utilisation des agents antimousse suivant la revendication 1 pour combattre la formation de mousse au cours de la cuisson de la pâte, du raffinage de la pâte, de la fabrication du papier et de la dispersion des pigments pour la fabrication du papier, en proportions de 0,02 à 0,5 partie en poids par 100 parties en poids du milieu formateur de mousse.